(19) **Europäisches Patentamt / European Patent Office / Office européen des brevets**

(11) **EP 4 459 636 A1**

(12) # EUROPEAN PATENT APPLICATION
published in accordance with Art. 153(4) EPC

(43) Date of publication:
**06.11.2024   Bulletin 2024/45**

(21) Application number: **22916879.4**

(22) Date of filing: **28.12.2022**

(51) International Patent Classification (IPC):
***G21C 9/016*** *(2006.01)*

(52) Cooperative Patent Classification (CPC):
**G21C 9/016**

(86) International application number:
**PCT/RU2022/000400**

(87) International publication number:
**WO 2023/128809 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **29.12.2021   RU 2021139690**

(71) Applicants:
• **Joint Stock Company "Atomenergoproekt"
Moscow 107996 (RU)**
• **Science and Innovations - Nuclear Industry
Scientific Development, Private Enterprise
Moscow 119017 (RU)**

(72) Inventors:
• **SIDOROV, Aleksandr Stalevich
Moscow 115612 (RU)**
• **SIDOROVA, Nadezhda Vasilievna
Moscow 115612 (RU)**
• **CHIKAN, Kristin Alesandrovich
Moscow 111116 (RU)**
• **NEDOREZOV, Andrej Borisovich
Podolsk 142100 (RU)**

(74) Representative: **Osmans, Voldemars et al
Agency Tria Robit
P.O. Box 22
LV-1010 Riga (LV)**

(54) **METHOD FOR MANUFACTURING A CORE CATCHER SUPPORT FRAME**

(57)    The invention related to technology for manufacturing safety systems of nuclear power plants. A method for manufacturing a core catcher cantilever truss is characterized in that two symmetrical parts of the cantilever truss are formed, each of which is made of outer, middle, and inner half-shells, which are connected between each other with radial and parallel force ribs, as well as upper and lower semicircular force plates by welding, with formation of parallel and radial sectors. After that the above-mentioned two symmetrical parts are connected to each other by welding in the area of two parallel sectors located on one Cartesian axis, so that the upper horizontal connection connects the upper semicircular force plates, a lower horizontal welded joint connects the lower semicircular force plates, outer, inner, and middle vertical welded joints connect the outer, inner, and middle half-shells. This improves the reliability of a core melt localization and cooling device.

Fig. 1

**(Cont. next page)**

Fig. 1

**Description**

TECHNICAL FIELD

The invention relates to technology for manufacturing a core catcher (hereinafter - CC), particularly to methods for manufacturing a CC cantilever truss.

BACKGROUND ART

The greatest radiation hazard is posed by core meltdown accidents, which can occur in case of multiple failures of core cooling systems.

During such accidents, a core melt, i.e. corium, melts in-core structures and a reactor vessel to leak outside a reactor, and, due to residual heat generation remaining inside it, can compromise the integrity of an NPP containment, which is the last barrier to release of radioactive products into the environment.

Avoiding this requires localizing the core melt (corium) leaked from the reactor vessel and ensuring its continuous cooling till complete crystallization. This function is performed by a core catcher, which prevents damage to a sealed containment of NPP and thus protects the population and the environment against radiation exposure in case of severe accidents of nuclear reactors.

A cantilever truss protects the vessel and internal CC utilities against corium-induced destruction and supports a guide plate, which transfers static and dynamic forces to the cantilever truss braced in a reactor shaft. The cantilever truss also ensures the operability of the guide plate in case of its destruction.

A method (RF No. 2576517, IPC G21C 9/016, priority dated 16.12.2014, RF Patent No. 2576516, IPC G21C 9/016, priority dated 16.12.2014, RF Patent No. 2575878, IPC G21C 9/016, priority dated 16.12.2014, Core catcher for NPP with WWER-1200, I.A. Sidorov, 7th International Scientific and Technical Conference "Ensuring Safety of NPPs with WWER", OKB GIDROPRESS, Russia, May 17-20, 2011) for manufacturing a CC cantilever truss is known, wherein the annular shells of different diameters are formed and welded to each other using ribs. Ring plates are welded to the upper and lower parts of the above-mentioned welded structure.

A drawback of such method for manufacturing a CC cantilever truss is that post-welding CC cantilever truss has equal strength in all radial directions. When beyond-design impact loads are applied from the guide plate, which simultaneously takes on thermomechanical and thermochemical effects from the core melt and impact effects from the destroyed bottom of the reactor vessel, the cantilever trass is destroyed not in pre-set directions, but in a random manner determined by the manufacturing process and the nature of thermal treatment of welded joints. At high intensity such effects are destructive for bearing elements of the CC cantilever truss and bracing elements of the CC cantilever truss in the reactor shaft, which is due to the action of the beyond-design pressure inside the reactor vessel, which exceeds the design residual pressure, which at the moment of the vessel bottom destruction must be established as a result of actions aimed at managing a severe beyond-design-basis accident.

SUMMARY OF INVENTION

The technical result of this invention is improving the reliability of the core catcher.

The task to be solved by the claimed invention is creating a method for manufacturing a CC cantilever truss, which ensures predictable destruction of bearing elements in case of beyond-design-basis accidents, seismic effects on the reactor shaft, and impact effects on the cantilever truss from the guide plate.

The task is solved by a method for manufacturing a core catcher cantilever truss, which is embodied in accordance with the invention, so that two symmetrical parts of the cantilever truss are formed, each of which is made of outer, middle, and inner half-shells, which are connected between each other with radial and parallel force ribs, as well as upper and lower semicircular force plates by welding, with formation of parallel and radial sectors, after which the above-mentioned two symmetrical parts are connected to each other by welding in the area of two parallel sectors located on one Cartesian axis, so that the upper horizontal connection connects the upper semicircular force plates, a lower horizontal welded joint connects the lower semicircular force plates, outer, inner, and middle vertical welded joints connect the outer, inner, and middle half-shells.

Using the method for manufacturing a CC catcher cantilever truss allows to ensure structural non-uniformity between its bearing elements, which results, during thermal expansions, in localization of the largest deformations of the cantilever truss occurring between parallel force ribs along the radial axis along which the welded joints connecting two symmetrical parts of the cantilever truss are located.

Additionally, when the method for manufacturing a core catcher cantilever truss is embodied in accordance with the invention, the thickness of the upper and the lower horizontal welded joints and the outer, inner, and middle vertical welded joints is made to be less than the thickness of the base metal and other welded joints, which allows to increase the strength inequality between the bearing elements of the cantilever truss, thus ensuring the maximum concentration of stresses in the location of welded joints of smaller thickness.

Additionally, when the method for manufacturing a core catcher cantilever truss is embodied in accordance with the invention, the outer, inner, and middle vertical welded joints are partially made, wherein cover plates are connected to the outer and inner vertical welded joints, as well as to the upper and lower horizontal welded joints.

BRIEF DESCRIPTION OF DRAWINGS

Fig. 1 shows the core catcher with the cantilever truss, which is made in accordance with the claimed invention.

Fig. 2 shows the core catcher cantilever truss, which is manufactured in accordance with the claimed invention.

Fig. 3 shows one of the two symmetrical parts of the core catcher cantilever truss, which is made in accordance with the claimed invention.

Fig. 4 shows the core catcher cantilever truss, which is manufactured in accordance with the claimed invention (connection of the two symmetrical parts).

Fig. 5 shows the core catcher cantilever truss, which is manufactured in accordance with the claimed invention (connection of the two symmetrical parts with placement of the cover plates on welded joints).

DESCRIPTION OF EMBODIMENTS

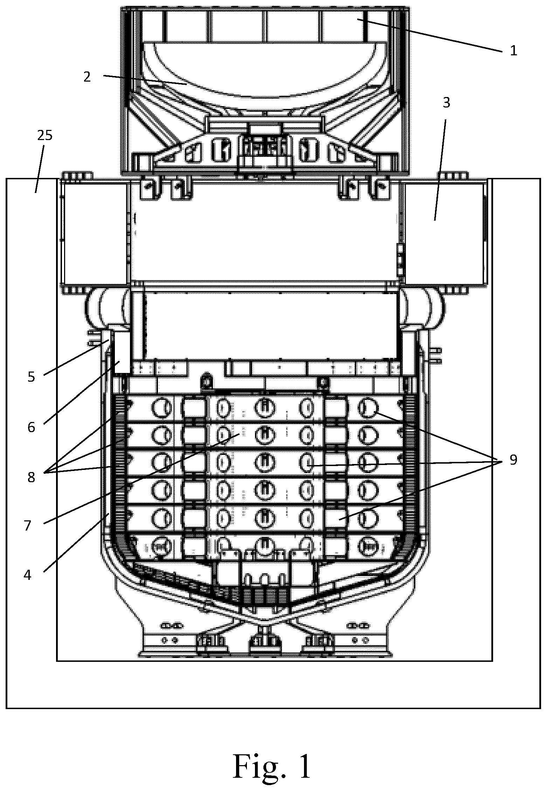

As shown in Fig. 1, the core catcher comprises a guide plate (1), which is mounted under a nuclear reactor vessel (2) and supported by a cantilever truss (3). A housing (4) with a filler (7) for receiving and distributing the melt is mounted under the cantilever truss (3). In the upper part of the housing (4) is a flange (5) is made, which is provided with a thermal protection (6). The filler (7) consists of several cassettes (8) mounted on each other, each of which contains one central and several peripheral holes (9).

The core catcher cantilever truss is manufactured as follows.

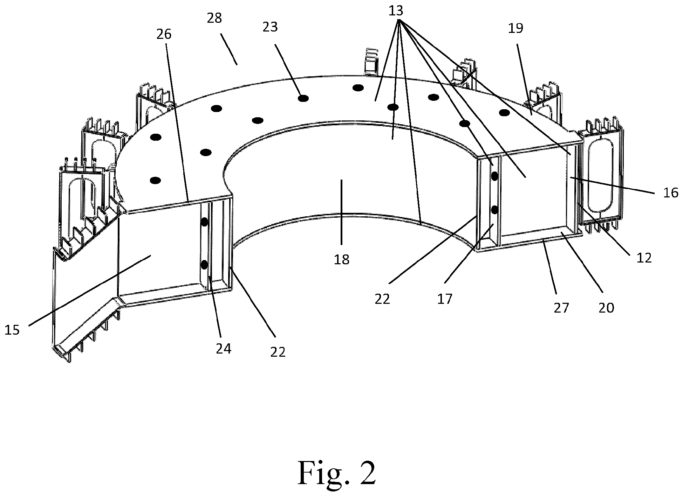

As shown in Fig. 2, one of two symmetrical parts (28) of the CC cantilever truss is manufactured by welding. In Fif. 2, only one of the two symmetrical parts of the CC cantilever truss is shown, since the other part has the same structure. Each symmetrical part (28) of the CC cantilever truss consists of the following supporting members: upper semicircular force plate (19), lower semicircular force plate (20), outer, inner, and middle force half-shells (16), (17), (18), and force ribs (15). All above-mentioned load-bearing elements form a force frame (13) of the CC cantilever truss.

The two formed symmetrical parts of the CC cantilever truss are connected with welded joints, so that an upper horizontal welded joint (26) connects the two upper semicircular force plates (19), a lower horizontal welded joint (27) connects the two lower semicircular force plates (20), and outer, inner and intermediate vertical welded joints (12), (22), (24) connect the outer, middle, and inner half-shells (16), (17), (18), respectively. In this case, the horizontal welded joints (26), (27), which are located in one cross-section, and the vertical welded joints (12), (22), (24), which are also located in one cross-section, ensure structural non-uniformity in regard to other elements of the CC cantilever truss, which allows to localize the largest deformations of the bearing elements of the CC cantilever truss during thermal expansions in the gauge between parallel force ribs (15) along which the welded joints are located.

In an embodiment of the invention, thicknesses (B) of the horizontal welded joints (26), (27) and the vertical welded joints (12), (22), (24), which connect the two symmetrical parts (28) of the CC cantilever truss, are made to be less than thicknesses (A) of the base metal and other welded joints used for manufacturing each of the two symmetrical parts (28).

To maintain the impact strength of the force frame (13), coefficient (U), which is equal to the ratio of the total thickness of a welded joint (B) to the thickness of the welded base metal (A), must be as follows:

$$0.8 < (U = B/A) < 1.0$$

At values of U=1.0 the effect of localization of thermal expansions of the force frame (13) is enhanced, while at values of U<0.8 the impact the strength of welded joints of the force frame (13) is not ensured.

In yet another embodiment of the invention, the force frame (13) consisting of the two symmetrical parts (28) is welded in such a way that the upper horizontal welded joint (26) connects the upper semicircular force plates (19), the lower horizontal welded joint (27) connects the lower semicircular force plates (20), and the outer, inner, and middle force half-shells (16), (17), (18) are partially connected with vertical welded joints.

In this case, in order to maintain the impact strength, values of coefficient (W), which is equal to the ratio of the total area of a real welded joint (F) including the real upper and lower horizontal welded joints (26), (27) and the real vertical welded joints (12), (22), (24), to the total theoretical area of a possible welded joint (Q), which is made on a closed circuit and connects all upper and lower semicircular force plates (19), (20) and half-shells (16), (17), (18), must meet the following ratio:

$$0.75 < (W = F/Q) < 1.0$$

At values of W=1.0 the effect of localization of thermal expansions of the force frame (13) is enhanced, while at values of W<0.75 the impact strength of welded joints of the force frame (13) is not ensured. To improve the impact strength and meet the criterion of 0.75<W<1.0, cover plates (11) are attached to the welded joints (12), (22), (26), (27) from above to increase the area of the above-mentioned welded joints between the two symmetrical parts (28) of the force frame (13).

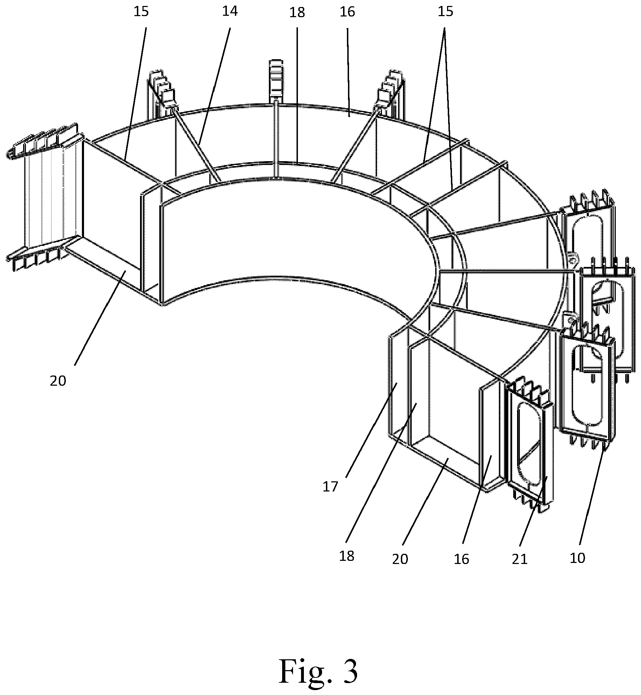

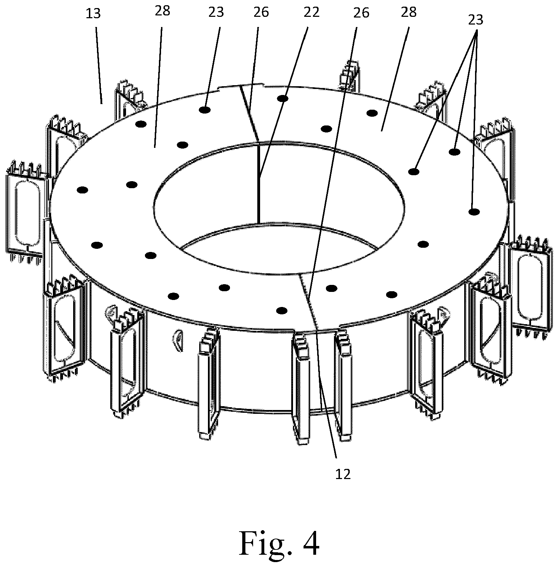

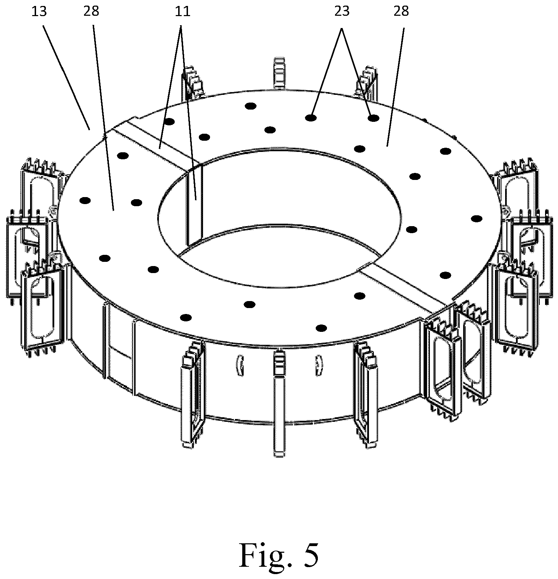

As shown in Figs. 3-5, each of the two symmetrical parts of the force frame of the core catcher cantilever truss comprises the radial force ribs (14), the parallel force ribs (15), the outer force half-shell (16), the inner force half-shell (17), the middle force half-shell (18), the upper semicircular force plate (19), and the lower semicircular force plate (20). The middle force half-shell (18) and the upper semicircular force plate (19) may include openings (23) for vapor release. Supporting legs (21) with anchor ribs (10) are mounted on the outer side of the outer force half-shell (16).

The core catcher cantilever truss manufactured in accordance with the claimed method functions as follows.

In case of joint beyond-design-basis thermal and mechanical effects on the force frame (13) from the both the melt mirror and the guide plate (1), there is a hazard of uncontrolled destruction of the force frame (13). To eliminate this phenomenon, the force frame (13) of the cantilever truss is welded from the two symmetrical parts (28) with upper and lower horizontal welded joints (26), (27) and external, internal and intermediate vertical welded joints (12), (22), (24), which together ensure the strength that is less than the strength of the base metal and welded joints of each of the symmetrical parts (28) of the force frame (13).

When a cantilever truss is manufactured from the two symmetrical parts (28), in order to hold both of the above-mentioned parts (28) in their designed position and prevent the equipment and materials they hold from collapsing into the housing (4) of the CC, the both parts (28) of the force frame (13) are independently braced to limit their spontaneous displacement. For this purpose, the supporting legs (21) are used, which ensure separate fastening of each part (28) of the force frame (13).

In case of high-intensity impact effects, the use of the supporting legs (21) ensures uniform distribution of forces on a reactor shaft (25) from the force frame (13) due to the formation of the required area of interaction between the supporting legs (21) and concrete of the reactor shaft (25), which are subjected to wave loading. When the supporting legs (21) are used, wave loads, which pass from the outer force shell (16) to the supporting legs (21) are distributed over the volume of concrete of the reactor shaft (25), and the supporting legs (21) themselves are resistant to local wave loads, and under high-intensity impact loads neither get destroyed themselves nor lead to a strength loss in concrete of the reactor shaft (25).

At the time of destruction of the nuclear reactor vessel (2), the core melt, being subjected to hydrostatic and residual pressures, starts coming to the surface of the guide plate (1), which is held by the cantilever truss (3). The melt flowing down the guide plate (1) heats and partially melts it. The nature of interaction between the melt and the guide plate (1) and the results of this interaction largely depend on the pressure inside the reactor vessel (2), which is divided into two categories: design-basis and beyond-design-basis ones.

The design-basis pressure is a pressure of a vapor-gas medium in the reactor vessel (2) that does not exceed the residual pressure after pressure reduction actions are taken in case of a severe beyond-design-basis accident. The beyond-design-pressure is any pressure that exceeds the residual pressure and arises from the uncontrolled entry of water into the reactor vessel (2) in case of a core destruction, or a pressure established in the reactor vessel (2) in case of an incomplete performance of pressure reduction actions.

At the design-basis pressure inside the reactor vessel (2), there is a longer two-stage melt flow: first, mostly the metal part of the melt, which is then followed its oxide part. This longer melt flow onto the guide plate (1) does not lead to sectoral destruction of the guide plate (1) and the cantilever truss (3).

At the beyond-design-basis pressure inside the reactor vessel (2), a rapid single-stage jet head melt flow is possible, which is accompanied by a rapid axial increase in the melt flow orifice from the reactor vessel (2). In this case, if there is no earlier destruction of the reactor vessel (2) bottom, s slipstream of melted metals and oxides may cut a through 60o-high sector in the horizontal plane in the guide plate (1) and enter into direct interaction with the cantilever truss (3). The force frame (13) ensures strength and stability of the cantilever truss (3) during a vertical through destruction of the 60o-high sector of the cantilever truss (3) in the horizontal plane.

In case of significant thermal effects on the force frame (13) from the melt mirror, the largest thermal deformations occur in the inner force shell, which made of interconnected inner force half-shells (17) and in the upper force plate, which is made of the interconnected semicircular force plates (19). Due to the azimuthal asymmetry ensured by an alternation of the radial and parallel force ribs (14), (15), the force frame (13) is capable of localizing thermal deformations occurring in the inner force shell, which is made of the interconnected inner force half-shells (17), and in the upper force plate (19), which is made of the interconnected semicircular force plates (19), in the gauge between the parallel force ribs (15).

The elements of the force frame (13) of the cantilever truss (3), namely the parallel force ribs (15), the radial force ribs (14), the inner, middle, and outer force half-shells (16), (17), (18), as well as the upper and lower semicircular force plates (19), (20) can be made of grade 09G2S steel.

The thickness of the force plates (19), (20) is 60 mm.

The total thickness of double-sided horizontal welded joints of the two parts (28) of the cantilever truss is 50 mm with a 10-mm gap between the welded joints.

The thickness of the double-sided vertical welded joints (22), which connect the two parts (28) of the cantilever truss is 50 mm with a 10-mm gap between the welded joints.

The thickness of the one-sided vertical welded joints (12), (24) of the cover plates (21) is 2x30 mm with a 20-to-80 mm gap between welded joints of the paired plates.

The thickness of the cover plates (11) is 20 mm.

Thus, the application of the method for manufacturing a core catcher cantilever truss allowed to ensure predictable destruction of the bearing elements of the cantilever truss in case beyond-design-basis accidents, seismic effects on the reactor shaft and impact effects on the cantilever truss from the guide plate, and, consequently, improve the reliability of the CC.

**Claims**

1. A method for manufacturing a core catcher cantilever truss, **characterized in that** two symmetrical parts of the cantilever truss are formed, each of which is made of outer, middle, and inner half-shells, which are connected between each other with radial and parallel force ribs, as well as upper and lower semicircular force plates by welding, with formation of parallel and radial sectors, after which the above-mentioned two symmetrical parts are connected to each other by welding in the area of two parallel sectors located on one Cartesian axis, so that the upper horizontal connection connects the upper semicircular force plates, a lower horizontal welded joint connects the lower semicircular force plates, outer, inner, and middle vertical welded joints connect the outer, inner, and middle half-shells.

2. The method according to claim 1, **characterized in that** the thickness of the upper and the lower horizontal welded joints and the outer, inner, and middle vertical welded joints is made to be less than the thickness of the base metal and other welded joints.

3. The method according to claim 1, **characterized in that** the outer, inner, and middle vertical welded joints are partially made, wherein cover plates are connected to the outer and inner vertical welded joints, as well as to the upper and lower horizontal welded joints.

Fig. 1

Fig. 2

Fig. 3

Fig. 4

Fig. 5

## INTERNATIONAL SEARCH REPORT

| International application No. |
| --- |
| PCT/RU 2022/000400 |

**A.   CLASSIFICATION OF SUBJECT MATTER**
G21C 9/016 (2006.01)

According to International Patent Classification (IPC) or to both national classification and IPC

**B.   FIELDS SEARCHED**

Minimum documentation searched (classification system followed by classification symbols)
G21C 9/00, 9/016, G21C 21/00-21/18

Documentation searched other than minimum documentation to the extent that such documents are included in the fields searched

Electronic data base consulted during the international search (name of data base and, where practicable, search terms used)
PatSearch (RUPTO Internal), USPTO, PAJ, Espacenet, Information Retrieval System of FIPS

**C.   DOCUMENTS CONSIDERED TO BE RELEVANT**

| Category* | Citation of document, with indication, where appropriate, of the relevant passages | Relevant to claim No. |
| --- | --- | --- |
| A | RU 2165107 C2 (SANKT-PETERBURGSKY NAUCHNO-ISSLEDOVATELSKY I PROEKTNO-KONSTRUKTORSKY INSTITUT ATOMENERGOPROEKT) 10.04.2001 | 1-3 |
| A | FRIZEN S. A. PRIMENENIE SPIR DLIA OBOSNOVANIYA PROCHNOSTI I OPREDELENIYA NESUSHCHEI SPOSOBNOSTI OPORNOI KONSTRUKTSII REAKTORA VVER440 3 BLOKA KOLSKOI AES. Nauchno-tekhnicheskaya konferentsiya molodykh spetsialistov. OKB "GIDROPRESS ", 16-17 March 2011 | 1-3 |
| D, A | RU 2576517 C1 (AKTSIONERNOE OBSCHESTVO "ATOMENERGOPROEKT ") 10.03.2016 | 1-3 |
| D, A | RU 2575878 C1 (AKTSIONERNOE OBSCHESTVO "ATOMENERGOPROEKT ") 20.02.2016 | 1-3 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 March 2023 (30.03.2023) | 20 April 2023 (20.04.2023) |

| Name and mailing address of the ISA/ RU | Authorized officer |
| --- | --- |
| Facsimile No. | Telephone No. |

Form PCT/ISA/210 (second sheet) (April 2005)

**INTERNATIONAL SEARCH REPORT**

International application No.

PCT/RU 2022/000400

C (Continuation).      DOCUMENTS CONSIDERED TO BE RELEVANT

| Category* | Citation of document, with indication, where appropriate, of the relevant passages | Relevant to claim No. |
|---|---|---|
| A | RU 100327 U1 (OTKRYTOE AKTSIONERNOE OBSCHESTVO "SANKT-PETERBURGSKY NAUCHNO-ISSLEDOVATELSKY I PROEKTNO-KONSTRUKTORSKY INSTITUT "ATOMENERGOPROEKT" (OAO "SPBAEP")) 10.12.2010 | 1-3 |
| A | RU 2749995 C1 (AKTSIONERNOE OBSCHESTVO "ATOMENERGOPROEKT ") 21.06.2021 | 1-3 |
| A | US 4442065 A (R & D ASSOCIATES) 10.04.1984 | 1-3 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2576517 A
- WO 2576516 A

- WO 2575878 A

**Non-patent literature cited in the description**

- Ensuring Safety of NPPs with WWER. **I.A. SIDOR-OV.** 7th International Scientific and Technical Conference. OKB GIDROPRESS, 17 May 2011